# EUROPÄISCHE PATENTSCHRIFT

(11) **EP 1 076 765 B1**
(45) Veröffentlichungstag und Bekanntmachung des Hinweises auf die Patenterteilung: **14.06.2006**
(21) Anmeldenummer: 00920475.1
(22) Anmeldetag: 03.03.2000
(51) Int. Cl.: F02K 1/38, F02K 1/48

(54) **BLÜTENMISCHER FÜR EIN ZWEIKREIS-STRAHLTRIEBWERK**
BLOOM MIXER FOR A TURBOFAN ENGINE
MELANGEUR EN FORME DE FLEUR DESTINE A UN TURBOREACTEUR A DOUBLE FLUX

(30) Priorität: 05.03.1999 DE 19909792; 03.11.1999 DE 19952797
(43) Veröffentlichungstag der Anmeldung: 21.02.2001
(73) Patentinhaber: Rolls-Royce Deutschland Ltd & Co KG, 15827 Dahlewitz (DE)
(72) Erfinder: MUNDT, Christian, D-15732 Eichwalde (DE)
(74) Vertreter: Weber, Joachim
(86) Internationale Anmeldenummer: PCT/EP2000/001894
(87) Internationale Veröffentlichungsnummer: WO 2000/053915

(56) Entgegenhaltungen:
- GB-A- 2 119 859
- GB-A- 2 160 265
- US-A- 4 288 984
- US-A- 4 401 269
- US-A- 4 487 017
- US-A- 4 576 002
- US-A- 4 813 230
- US-A- 5 117 628

## Beschreibung

Die Erfindung betrifft einen Blütenmischer für ein Zweikreis-Strahltriebwerk, in welchem ein von einem Fan geförderter Nebenstrom mit einem vom Kerntriebwerk kommenden Heißgastrom vermischt wird und wozu der Blütenmischer im wesentlichen gleichmäßig über dem Umfang verteilt abwechselnd in Radialrichtung geringfügig nach außen und nach innen verlaufende, rinnenförmige Kanäle zur Führung des Nebenstromes sowie des Heißgasstromes aufweist, deren jeweiliges Kanalende durch einen im wesentlichen ebenen Endabschnitt gebildet wird, und wobei in einem in Strömungsrichtung verlaufenden Längsschnitt betrachtet die Endabschnitte von einigen Kanälen gegenüber den Endabschnitten der anderen Kanäle geneigt sind, so daß verschiedene Kanäle in Strömungsrichtung betrachtet an verschiedenen Stellen und somit zueinander versetzt münden. Zum bekannten Stand der Technik wird beispielshalber auf die GB 2 160 265 A verwiesen.

Zweikreis-Strahltriebwerke können in ihrer Effizienz, d.h. in ihrem spezifischen Brennstoffverbrauch verbessert werden, indem man den Heißgasstrom des Kerntriebwerkes mit dem äußeren kalten Massenfluß des Nebenstromes mischt und erst danach den dann gemischten Strom durch eine Düse entspannt. Dieser Effekt ist mit der Theorie der Thermodynamik nachweisbar und beruht im wesentlichen auf der Divergenz der Linien konstanten Drukkes im Enthalpie-Entropie-Diagramm. Ein weiterer Vorteil dieser internen Mischung der beiden Gasströme eines Zweikreis-Strahltriebwerkes liegt in der damit verbundenen Verminderung des Strahllärmes, was insbesondere beim Start des von diesem Triebwerk angetriebenen Flugzeuges von Bedeutung ist. Theoretische Betrachtungen bzgl. der Effizienzsteigerung und Lärmminderung durch Mischung zeigen aber auch, dass noch Defizite bis zum Erreichen des Maximums existieren.

Zur Verstärkung des Mischungseffektes werden üblicherweise sogenannte Blütenmischer eingesetzt, durch welche die Kontaktfläche zwischen dem Nebenstrom und dem Heißgasstrom erhöht wird und im Mischungsgebiet förderliche Strömungswirbel erzeugt werden. Zur Verbesserung der dreidimensionalen Gasstrom-Mischung im Mischungsgebiet eines Blütenmischers ist eine englischsprachig "scarfing" genannte Konfigurationsänderung an Blütenmischern bekannt, nach welcher die radial nach innen verlaufenden Kanäle des Blütenmischers wechselweise in Umfangsrichtung axial zurückgeschnitten bzw. nicht zurückgeschnitten oder sogar verlängert werden. Ein solchermaßen gestalteter Blütenmischer ist in der eingangs genannten GB 2 160 265 A gezeigt, wobei die jeweiligen Kanalenden durch im wesentlichen ebene sog. Endabschnitte gebildet werden und die Endabschnitte von einigen der Kanäle gegenüber denjenigen der anderen Kanäle geneigt sind.

Generell stellt die Auslegung eines Blütenmischers einen Kompromiss dar, wobei die Mischungseffizienz möglichst hoch sein soll, die damit einhergehenden Druckverluste jedoch möglichst niedrig. Die Höhe der Mischungseffizienz wird durch verschiedene Randbedingungen beeinflusst, so bspw. durch die Durchdringung des Mischers bezogen auf den Durchmesser des den Mischer umgebenden Strahlrohres sowie durch die Mischungsweglänge bis zur Entspannung durch die Düse bezogen auf den Durchmesser derselben. Die auftretenden Druckverluste setzen sich dabei aus Reibungsverlusten und Umlenkverlusten zusammen.

Die GB 2 119 859 A zeigt einen Abgas-Mixer oder Blütenmischer, bei welchem abwechselnd verteilt in Radialrichtung rinnenförmige Kanäle zur Führung des Nebenstroms sowie des Heißgasstroms vorgesehen sind. Die Kanäle enden hinsichtlich ihrer hinteren Kante im Wesentlichen in einer Ebene, wobei die einzelnen Kanäle jeweils gleich ausgebildet sind.

Eine andere Ausgestaltung zeigt die US 5 117 628. Dabei ist lediglich eine Sorte von Kanälen vorgesehen, die jeweils gleich ausgebildet sind und die jeweils ein eingesetztes Rohr zur zusätzlichen Strömungsbeeinflussung aufweisen. Diese Ausgestaltungsform ist hinsichtlich der Geometrie und hinsichtlich der Herstellungsmöglichkeiten sehr aufwendig.

An einem Blütenmischer nach dem Oberbegriff des Anspruchs 1 Maßnahmen aufzuzeigen, mit Hilfe derer insbesondere die Mischungseffizienz weiter gesteigert werden kann, ohne erhöhte Druckverluste in Kauf nehmen zu müssen, ist Aufgabe der vorliegenden Erfindung.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist nicht nur jeder zweite radial geringfügig nach innen verlaufende Kanal axial zurückgeschnitten, was dem üblichen "scarfing" nach der bereits mehrfach genannten GB 2 160 265 A entspricht, sondern zusätzlich jeder zweite der radial geringfügig nach außen verlaufenden Kanäle. Es sind also sowohl die Endabschnitte zweier in Umfangsrichtung aufeinander folgender radial nach innen verlaufender Kanäle gegeneinander geneigt, als auch die Endabschnitte zweier in Umfangsrichtung aufeinander folgender radial nach außen verlaufender Kanäle. In anderen Worten ausgedrückt liegen somit sowohl von den radial geringfügig nach außen verlaufenden Kanälen als auch von den radial geringfügig nach innen verlaufenden Kanälen jeweils zwei unterschiedliche Kanal-Längen vor, wenn die Kanal-Länge durch die in Strömungsrichtung gemessene Länge der Kanalwand bzw. der Blütenmischerwand beschrieben wird.

Erfindungsgemäß liegt somit quasi ein Gruppe von vier unterschiedlichen Kanälen vor, nämlich jeweils ein kürzerer und ein längerer geringfügig radial nach außen verlaufender Kanal und jeweils ein kürzerer und ein längerer geringfügig radial nach innen verlaufender Kanal. Diese Kanäle sind dabei wie angegeben angeordnet, d.h. in Umfangsrichtung betrachtet folgt auf einen längeren nach innen verlaufenden Kanal ein längerer nach außen verlaufender Kanal und auf diesen ein kürzerer nach innen verlaufender Kanal, an den sich schließlich ein kürzerer nach außen verlaufender Kanal anschließt. Eine derartige Gruppe liegt nun an einem erfindungsgemäßen Blütenmischer über dessen Umfang verteilt mehrfach vor. Dabei kann eine periodische Anordnung gewählt werden, d.h. auf eine erste Gruppe folgt eine zweite Gruppe, in der die Kanäle in der gleichen Reihenfolge wie in der ersten Gruppe angeordnet sind. Es kann jedoch auch eine spiegelsymmetrische Wiederholung gewählt werden, derart, daß auf eine erste Gruppe eine zweite Gruppe folgt, in der die Kanäle spiegelsymmetrisch zur ersten Gruppe angeordnet sind.

Mit den erfindungsgemäßen Merkmalen erhöht sich die Dreidimensionalität des Mischungsprozesses erheblich und damit die Mischungseffizienz des Blütenmischers. Aufgrund der Tatsache, daß die Oberfläche eines Blütenmischers in Radialrichtung nach außen betrachtet überproportional ansteigt, erhält man durch das beschriebene Zurückschneiden des Blütenmischers an dessen Außenseite, d.h. an den radial geringfügig nach außen verlaufenden Kanälen eine vergleichsweise große Verminderung der Oberfläche mit den entsprechenden Vorteilen hinsichtlich Gewicht und Optimierung des Druckverlustes. Durch die größere geometrische Flexibilität werden die am bzw. im Blütenmischer entstehenden Wirbel räumlich besser verteilt, d.h. es entsteht ein komplexer und somit bestmöglicher Mischprozess.

In diesem Zusammenhang sei noch darauf hingewiesen, daß die gewünschte verbesserte Vermischung auch dadurch hervorgerufen wird, daß die verschiedenen genannten Kanäle unterschiedliche Längen besitzen, so daß es zur Erzielung des gewünschten Effektes nicht unbedingt erforderlich ist, bspw. jeden zweiten Kanal axial stark zurückzuschneiden. Vielmehr können auch einige der Kanäle verlängert sein, während dazu benachbarte Kanäle bspw. einen im wesentlichen senkrecht zur Strömungsrichtung verlaufenden Endabschnitt aufweisen können. Der Vorteil der Gewichtsreduzierung wird hingegen bestmöglich durch das erwähnte axiale Zurückschneiden erreicht. Im übrigen sollte die Gesamt-Anzahl der sog. Blütenblätter eines erfindungsgemäßen Blütenmischers ein Vielfaches der Zahl "4" sein, da dann eine exakte Periodizität einstellbar ist, d.h. im Blütenmischer ist eine bestimmte Anzahl von Kanal-Gruppen vorhanden, wobei jede Gruppe in sich vollständig ist, d.h. aus den angegebenen vier Kanälen mit unterschiedlichen Längen besteht.

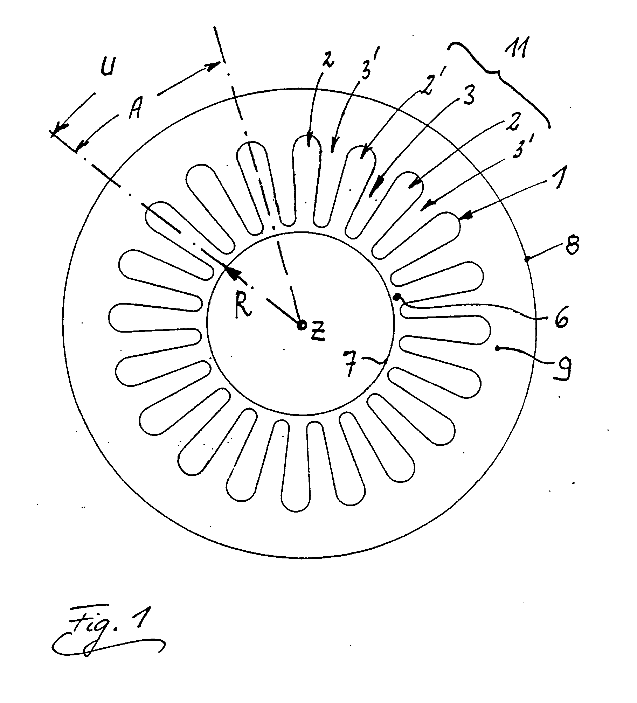

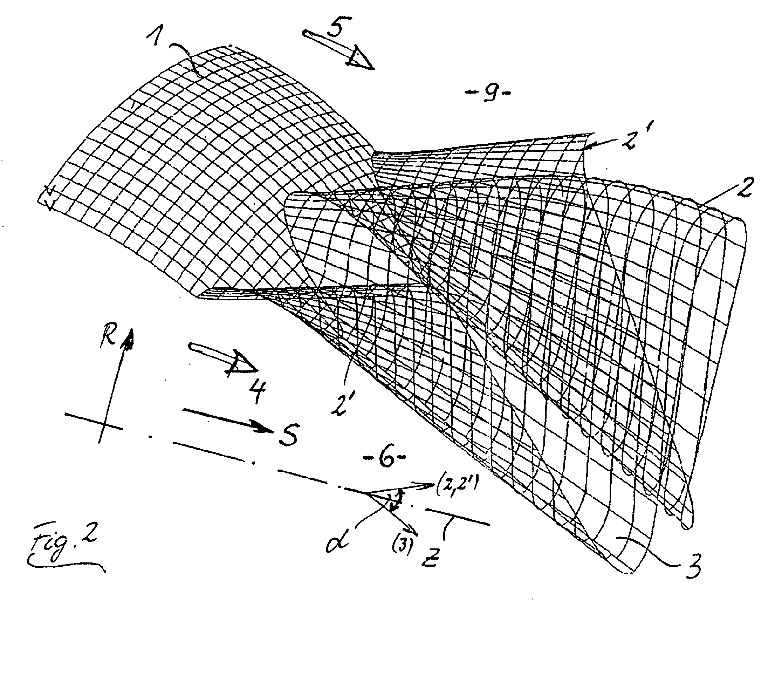

Näher erläutert wird die Erfindung anhand eines bevorzugten Ausführungsbeispieles, von welchem in Fig.1 insbesondere des besseren Verständnisses wegen eine Draufsicht von hinten (d.h. gegen Strömungsrichtung betrachtet) dargestellt ist, während Fig.2 in einer isometrischen Seitenansicht ein in Fig. 1 mit dem Buchstaben A bezeichnetes Segment eines erfindungsgemäßen Blütenmischers zeigt. Diese Ansicht nach Fig.2 entspricht somit einem in Strömungsrichtung der geführten Gasströme verlaufenden Teil-Längsschnitt durch den Blütenmischer.

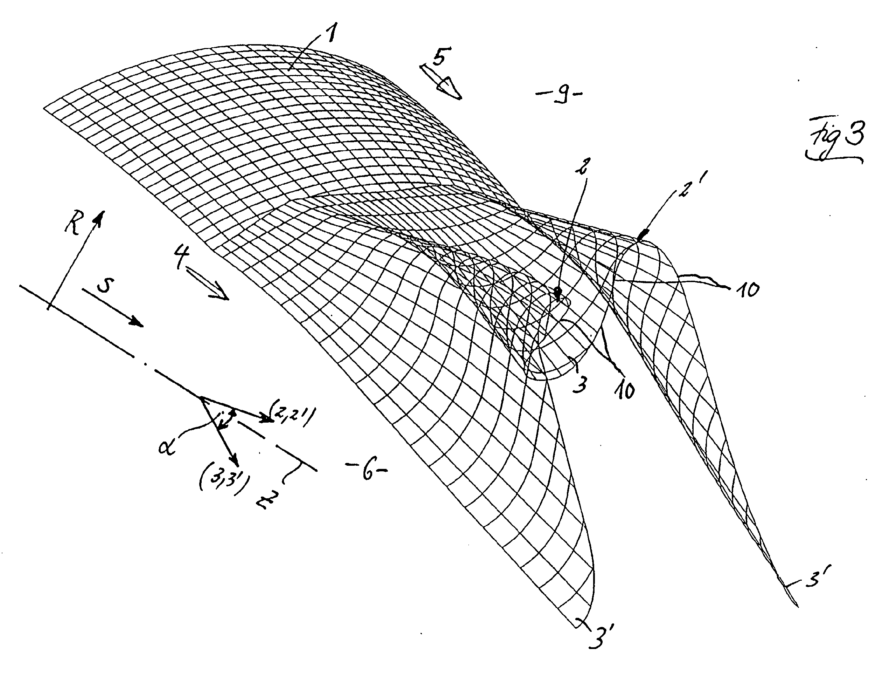

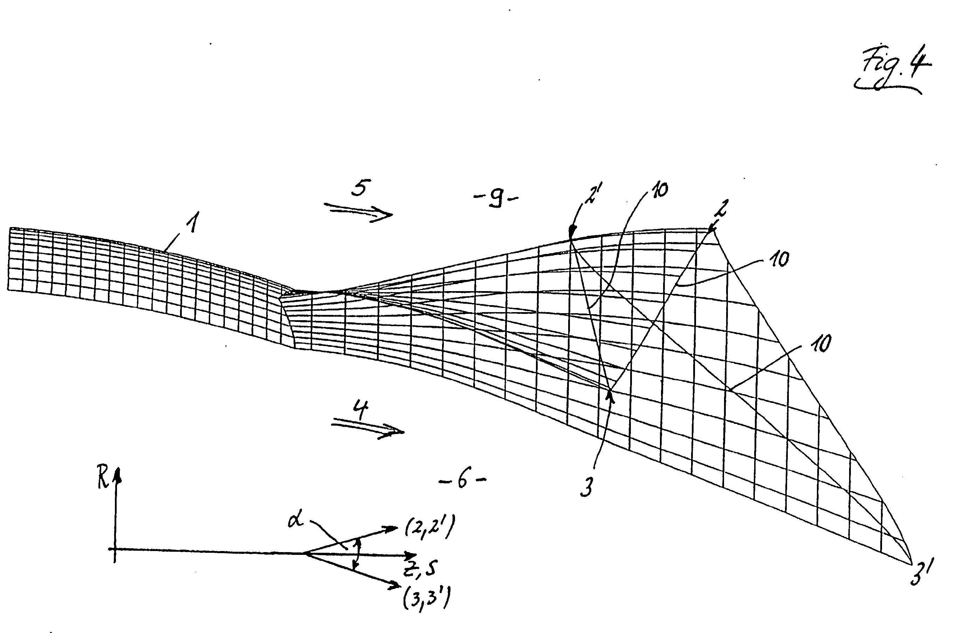

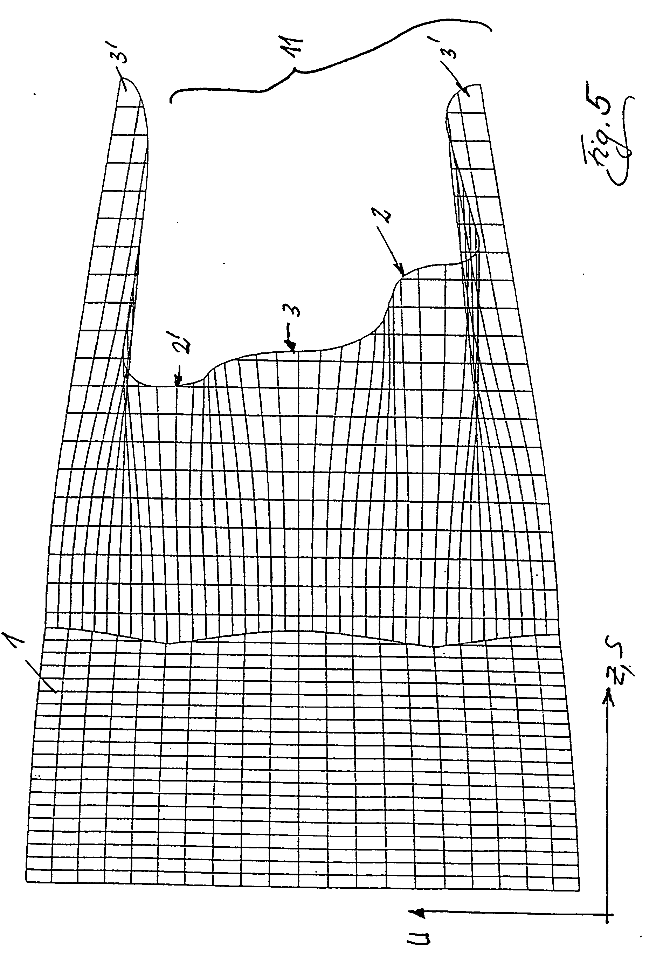

Näher erläutert wird die Erfindung weiterhin anhand eines weiteren bevorzugten Ausführungsbeispieles. Die Fig.3 zeigt in einer isometrischen Seitenansicht ein in Fig.1 mit dem Buchstaben A bezeichnetes Segment eines erfindungsgemäßen Blütenmischers. Diese Ansicht nach Fig.3 entspricht somit einem in Strömungsrichtung der geführten Gasströme verlaufenden Teil-Längsschnitt durch den Blütenmischer. Weiterhin zeigt Fig.4 eine Seitenansicht (in Umfangsrichtung betrachtet) und Fig. 5 eine Aufsicht (in Radialrichtung nach innen hin betrachtet) auf das Blütenmischer-Segment nach Fig.3.

In seinem grundsätzlichen Aufbau ähnelt ein erfindungsgemäßer Blütenmischer dem bspw. aus der bereits genannten GB 2 160 265 A bekannten Stand der Technik, weshalb an dieser Stelle nochmals ausdrücklich auf diese Schrift verwiesen wird. Wie dem Fachmann bekannt ist, handelt es sich bei einem Blütenmischer um ein im wesentlichen rohrförmiges Gebilde, dessen Mantel jedoch nicht durch einen einfachen Kreiszylinder gebildet wird. Vielmehr ist - wie Fig.1 verdeutlicht - die Mantelfläche 1 des Blütenmischers quasi wellenförmig ausgebildet, so daß durch diese Mantelfläche 1 eine Vielzahl von rinnenförmigen Kanälen 2, 2', 3, 3' gebildet wird, die im wesentlichen in Richtung der Zentralachse Z des Blütenmischers verlaufen. Diese Zentralachse Z ist die Längsachse des quasi rohrförmigen Blütenmischers und steht in Fig.1 senkrecht zur Zeichenebene.

Über diesen Blütenmischer, der im Endbereich eines Zweikreis-Strahltriebwerkes angeordnet ist, werden einerseits der vom Kerntriebwerk des Zweikreis-Strahltriebwerkes kommende Heißgasstrom 4 und andererseits der von einem Fan dieses Strahltriebwerkes geförderte Nebenstrom 5 geführt (vgl. auch Fig.2, 3), wobei die Strömungsrichtung S dieser beiden Gasströme 4, 5 im wesentlichen parallel zur Zentralachse Z ist.

Dabei wird der Heißgasstrom 3 im Innenraum 6 des Blütenmischers geführt, in den ferner der konzentrisch zur Zentralachse Z angeordnete und in Fig.1 durch einen Kreis dargestellte Niederdruckturbinenkonus 7 hineinragt, so daß der Heißgasstrom 3 durch den Ringraum zwischen dem Niederdruckturbinenkonus 7 und der Mantelfläche 1 des Blütenmischers strömt, und zwar bei der Darstellung nach Fig.1 entgegengesetzt zur Blickrichtung.

Der kalte Nebenstrom 4 wird außerhalb der Mantelfläche 1 des Blütenmischers geführt, und zwar innerhalb eines von der Mantelfläche 1 sowie von einem den Blütenmischer umgebenden Strahlrohr 8 (vgl. Fig.1) gebildeten Ringraumes 9, und strömt dabei ebenfalls entgegengesetzt zur Blickrichtung in der Darstellung nach Fig.1.

Bereits kurz erwähnt wurden die durch die Wellenform der Mantelfläche 1 gebildeten rinnenförmigen Kanäle 2, 2', 3, 3' die zum Innenraum 6 bzw. zum Ringraum 9 hin offen sind. In den zum Ringraum 9 hin offenen Kanälen 3 wird somit der Nebenstrom 5 geführt, während in den zum Innenraum 6 hin offenen Kanälen 2 der Heißgasstrom 4 geführt wird, und zwar jeweils in Strömungsrichtung S. Wie bei Blütenmischern üblich verlaufen nun diese Kanäle 2, 2`, 3, 3' in Radialrichtung R des Blütenmischers betrachtet - die Radialrichtung R steht senkrecht zur Zentralachse Z - abwechselnd geringfügig nach außen und nach innen, wie die Fig.2, 3 zeigen. Dabei verlaufen die den Heißgasstrom 4 führenden Kanäle 2, 2' in Radialrichtung R um ein gewisses Maß nach außen, d.h. zum Strahlrohr 8 hin, während die den Nebenstrom 5 führenden Kanäle 3, 3' in Radialrichtung R um ein gewisses Maß nach innen, d.h. zur Zentralachse Z hin verlaufen.

Der Blütenmischer besitzt eine bestimmte Längserstreckung in Richtung der Zentralachse Z, d.h. die Kanäle 2, 2', 3, 3' des Blütenmischers enden offen in einem sog. Endabschnitt 10 (vgl.
Fig.2, 3). Dabei ist die Mantelfläche 1 des Blütenmischers solchermaßen nach hinten hin abgeschnitten, daß die Endabschnitte 10 der einzelnen Kanäle 2, 2', 3, 3' jeweils für sich im wesentlichen eine Ebene beschreiben. Über diese Endabschnitte 10 treten nun die in den Kanälen 2, 2', 3, 3' geführten Gasstöme in Strömungsrichtung S betrachtet sozusagen nach hinten (bzw. in der Darstellung nach den Fig.2 bis 4 nach rechts) aus.

Nachdem gemäß den bisherigen Erläuterungen die Kanäle 2, 2' in Radialrichtung R zusätzlich geringfügig nach außen und die Kanäle 3, 3' geringfügig nach innen verlaufen, werden somit die aus den Kanalenden bzw. aus den Endabschnitten 10 in Strömungsrichtung S austretenden Gasströme bestmöglich miteinander vermischt, d.h. im Bereich stromab der Endabschnitte 10 bzw. stromab des Blütenmischers findet eine extrem ausgeprägte Vermischung des Heißgasstromes 4 mit dem Nebenstrom 5 statt.

Wie aus Fig.1 hervorgeht, liegen die durch die Mantelfläche 1 des Blütenmischers gebildeten (und der Übersichtlichkeit halber nicht mit einer eigenen Bezugsziffer versehenen) Seitenwände der in Radialrichtung R geringfügig nach außen bzw. nach innen verlaufenden Kanäle 2, 3 im wesentlichen in durch die Zentralachse Z des Blütenmischers verlaufenden Radialebenen, wobei die Seitenwände jedes einzelnen Kanales 2, 2' bzw. 3, 3' im wesentlichen exakt zueinander parallel sind. Dabei sind hier im Vergleich zum bekannten Stand der Technik beispielsweise nach der bereits mehrfach genannten GB 2 160 265 A relativ viele Kanäle 2, 2', 3, 3' (im vorliegenden Beispiel 24 bzw. 20 Stück) vorgesehen. Gleichzeitig ist - wie aus den Fig.2, 3 hervorgeht - der Winkel α zwischen den in den jeweiligen Symmetrieebenen verlaufenden Definitionslinien eines nach außen gehenden Kanals 2 bzw. 2' und eines nach innen gehenden Kanals 3 bzw. 3' relativ groß. Gegenüber dem bekannten Stand der Technik beispielsweise nach der GB 2 160 265 A verlaufen die den Heißgasstrom 4 führenden Kanäle 2, 2' in Radialrichtung R somit stärker nach außen und die den Nebenstrom 5 führenden Kanäle 3, 3' somit verstärkt nach innen. Mit diesen Maßnahmen ergibt sich ein Blütenmischer mit hoher Durchdringung und einer guten Ausmischung des Heißgasstromes 4.

Unerwünschterweise führt eine derartige Ausbildung des Blütenmischers jedoch dazu, daß aufgrund der vielen Kanäle 2, 2', 3, 3' und der damit verbundenen großen Oberfläche der Mantelfläche 1 sowohl der Druckverlust im Blütenmischer als auch dessen Gewicht relativ hoch sind. Zur Beseitigung dieser Nachteile ist der Blütenmischer wie im folgenden näher beschrieben gestaltet:

Wie die Fig.2 bis 4 zeigen, ist über dem Umfang U bzw. in Umfangsrichtung U (vgl. hierzu Fig.1) betrachtet jeder zweite in Radialrichtung R nach außen verlaufende Kanal 2, 2' axial - d.h. in Richtung der Zentralachse Z - stark zurückgeschnitten. Dies bedeutet, daß jeder zweite Kanal 2, der in Fig. 2 zur besseren Verdeutlichung mit der ergänzenden Bezugsziffer 2' versehen ist, sozusagen invers zurückgeschnitten ist und in Strömungsrichtung S betrachtet eher bzw. früher endet als die übrigen Kanäle 2 und 3, die nicht zurückgeschnitten sind. In anderen Worten ausgedrückt bedeutet dies, daß die radial nach außen verlaufenden Kanäle 2 bzw. 2' in Umfangsrichtung U betrachtet abwechselnd zueinander in Strömungsrichtung S versetzt münden. Hinsichtlich des zweiten Ausführungsbeispiels ergibt sich folgendes:

Diese sozusagen invers zurückgeschnittenen Kanäle sind mit der Bezugsziffer 2' versehen und enden in Strömungsrichtung S betrachtet eher bzw. früher, als die anderen, radial nach außen verlaufenden Kanäle, die mit der Bezugsziffer 2 bezeichnet sind und nicht zurückgeschnitten sind. In anderen Worten ausgedrückt bedeutet dies, daß die radial nach außen verlaufenden Kanäle 2 bzw. 2' in Umfangsrichtung U betrachtet abwechselnd zueinander in Strömungsrichtung S versetzt münden, bzw. daß in Umfangsrichtung U betrachtet jeweils zwei einander benachbarte radial nach außen verlaufende Kanäle 2, 2' unterschiedlich lang sind, wobei hier jeder Kanal 2 länger ist als jeder Kanal 2'.

Bevorzugt weisen nicht nur die radial geringfügig nach innen verlaufenden Kanäle 3, sondern in Umfangsrichtung U betrachtet auch jeder zweite der radial geringfügig nach außen verlaufenden Kanäle 2 einen im wesentlichen senkrecht zur Zentralachse Z verlaufenden oder auch nach vorne, d.h. in Strömungsrichtung S geneigten Endabschnitt 10 auf und sind somit nicht zurückgeschnitten. Hingegen sind die zwischen diesen einen senkrecht zur Zentralachse verlaufenden Endabschnitt 10 aufweisenden Kanäle 2 liegenden radial nach außen verlaufenden Kanäle 2' gegen Strömungsrichtung S betrachtet und somit invers zurückgeschnitten. Die Endabschnitte 10 dieser invers zurückgeschnittenen Kanäle 2' sind somit gegenüber der Zentralachse 1 sozusagen nach hinten, d.h. gegen Strömungsrichtung S geneigt.

In vergleichbarer Weise ist über dem Umfang U bzw. in Umfangsrichtung U (vgl. hierzu Fig.1) betrachtet jeder zweite der in Radialrichtung R nach innen verlaufenden Kanäle 3, 3' axial - d.h. in Richtung der Zentralachse Z - stark zurückgeschnitten. Diese zurückgeschnittenen Kanäle sind mit der Bezugsziffer 3' versehen und enden in Strömungsrichtung S betrachtet weiter hinten bzw. später, als die anderen, radial nach innen verlaufenden Kanäle, die mit der Bezugsziffer 3 bezeichnet sind und nicht zurückgeschnitten sind. In anderen Worten ausgedrückt bedeutet dies, daß die radial nach innen verlaufenden Kanäle 3 bzw. 3' in Umfangsrichtung U betrachtet abwechselnd zueinander in Strömungsrichtung S versetzt münden, bzw. daß in Umfangsrichtung U betrachtet jeweils zwei einander benachbarte radial nach außen verlaufende Kanäle 3, 3' unterschiedlich lang sind, wobei hier jeder Kanal 3' länger ist als jeder Kanal 3.

Nun sind die einzelnen Kanäle 2, 2', 3, 3' derart angeordnet, daß in Umfangsrichtung U betrachtet auf einen längeren nach innen verlaufenden Kanal 3' ein längerer nach außen verlaufender Kanal 2 und auf diesen ein kürzerer nach innen verlaufender Kanal 3 folgt, an den sich ein kürzerer nach außen verlaufender Kanal 2' anschließt. Diese vier in Umfangsrichtung U aufeinander folgende Kanäle bilden (wie insbesondere aus Fig.1 hervorgeht) eine sich über dem gesamten Umfang wiederholende Gruppe 11, d.h. aufeinanderfolgend sind über dem Umfang U des Blütenmischers mehrere derartige Gruppen 11 vorgesehen, wobei sich - was bereits erläutert wurde - diese Gruppen 11 in periodischer oder in spiegelsymmetrischer Weise wiederholen können.

Bevorzugt ist jeder längere nach innen verlaufende Kanal 3' stark zurückgeschnitten, während der kürzere nach innen verlaufende Kanal 3 kaum oder nicht invers zurückgeschnitten ist, d.h. der Endabschnitt 10 des kürzeren Kanales 3 verläuft nahezu senkrecht zur Zentralachse Z, während der Endabschnitt 10 des längeren geringfügig radial nach innen verlaufenden Kanales 3' stark in Strömungsrichtung S geneigt ist. Von den geringfügig radial nach außen verlaufenden Kanälen ist derjenige kürzere, mit der Bezugsziffer 2' bezeichnete in geringem Maße invers zurückgeschnitten. Die Endabschnitte 10 der invers zurückgeschnittenen Kanäle 2' 3' sind dabei gegenüber der Zentralachse 1 sozusagen nach hinten, d.h. gegen Strömungsrichtung S geneigt.

Aufgrund dieser Gestaltung erhöht sich die Dreidimensionalität des Mischungsprozesses und damit die Mischungseffizienz: Ferner erhält man durch das beschriebene Zurückschneiden des Blütenmischers an dessen Außenseite aufgrund der Tatsache, daß die Oberfläche seiner Mantelfläche 1 in Radialrichtung R nach außen hin überproportional ansteigt, eine vergleichsweise hohe Verminderung der Oberfläche mit den entsprechenden Vorteilen bei Gewicht und Optimierung des Druckverlustes. Insbesondere wurde auch festgestellt, daß eine derartige Gestaltung nicht zu einer zusätzlichen Wärmebelastung des Strahlrohres 8 führt, so daß diese Gestaltung keine weiteren Nachteile verursacht. Hingegen ergeben sich eine Vielzahl von Vorteilen, nämlich eine Verminderung des Druckverlustes des Blütenmischers, eine Gewichtsreduktion und Kostenreduktion desselben. Insbesondere aber stellt sich durch die hohe Zerteilung des Heißgasstromes 4 und die erheblich verstärkte. Dreidimensionalität der Mischung eine verbesserte Mischungseffizienz ein, wobei abschließend noch darauf hingewiesen sei, daß selbstverständlich eine Vielzahl von Details insbesondere konstruktiver Art durchaus abweichend vom gezeigten Ausführungsbeispiel gestaltet sein kann, ohne den Inhalt der Patentansprüche zu verlassen.

### Bezugszeichenliste:

- 1: Mantelfläche (des Blütenmischers)
- 2: längerer radial nach außen verlaufender Kanal (für Heißgasstrom)
- 2': invers zurückgeschnittener und somit kürzerer Kanal 2
- 3: kürzerer radial nach innen verlaufender Kanal (für Nebenstrom)
- 3': zurückgeschnittener und somit längerer Kanal 3
- 4: Heißgasstrom
- 5: Nebenstrom
- 6: Innenraum (des Blütenmischers)
- 7: Niederdruckturbinenkonus
- 8: Strahlrohr
- 9: Ringraum
- 10: Endabschnitt (eines Kanales)
- 11: Gruppe von Kanälen 2, 2', 3, 3'

- A: Segment des Blütenmischers, in Fig.2 dargestellt
- R: Radialrichtung
- S: Strömungsrichtung
- U: Umfang / Umfangsrichtung
- Z: Zentralachse
- α: Winkel zwischen den geringfügig nach außen und nach innen verlaufenden Kanälen 2, 2', 3, 3'

## Patentansprüche

1. Blütenmischer für ein Zweikreis-Strahltriebwerk, in welchem ein von einem Fan geförderter Nebenstrom (5) mit einem vom Kerntriebwerk kommenden Heißgastrom (4) vermischt wird und wozu der Blütenmischer im wesentlichen gleichmäßig über dem Umfang (U) verteilt abwechselnd in Radialrichtung (R) geringfügig nach außen und nach innen verlaufende, rinnenförmige Kanäle (2, 2', 3, 3') zur Führung des Nebenstromes (5) sowie des Heißgasstromes (4) aufweist, deren jeweiliges Kanalende durch einen im wesentlichen ebenen Endabschnitt (10) gebildet wird, und wobei in einem in Strömungsrichtung (S) verlaufenden Längsschnitt betrachtet die Endabschnitte (10) von einander benachbarten Kanälen (2, 3, 2', 3') gegeneinander geneigt sind, so dass verschiedene Kanäle (2, 2', 3, 3') in Strömungsrichtung (S) betrachtet an verschiedenen Stellen und somit zueinander versetzt münden, **dadurch gekennzeichnet, dass** jeweils vier in Umfangsrichtung (U) aufeinander folgende Kanäle eine sich über dem gesamten Umfang wiederholende Gruppe (11) bilden, die aus zwei geringfügig in Radialrichtung (R) nach außen verlaufenden Kanälen (2, 2') sowie zwei geringfügig in Radialrichtung (R) nach innen verlaufenden Kanälen (3, 3') besteht und von denen jeweils einer kürzer und der andere länger ist, wobei in Umfangsrichtung (U) betrachtet auf einen längeren nach innen verlaufenden Kanal (3') ein längerer nach außen verlaufender Kanal (2) und auf diesen ein kürzerer nach innen verlaufender Kanal (3) folgt, an den sich ein kürzerer nach außen verlaufender Kanal (2') anschließt.

2. Blütenmischer nach Anspruch 1, **dadurch gekennzeichnet, dass** der längere nach innen verlaufende Kanal (3') stark zurückgeschnitten ist, während der kürzere nach innen verlaufende Kanal (3) kaum oder nicht zurückgeschnitten ist.

3. Blütenmischer nach Anspruch 1 oder 2, **dadurch gekennzeichnet, dass** der Endabschnitt (10) des kürzeren, nach außen verlaufenden Kanals (2') gegen die Strömungsrichtung (S) geneigt ist und somit invers zurückgeschnitten ist.

4. Blütenmischer nach einem der Ansprüche 1 bis 3, **dadurch gekennzeichnet, dass** sich die Gruppe (11) über dem Umfang (U) periodisch oder spiegelsymmetrisch wiederholt.

5. Blütenmischer nach Anspruch 4, **dadurch gekennzeichnet, daß** der längere nach innen. verlaufende Kanal (3') stark zurückgeschnitten ist, während der kürzere nach innen verlaufende Kanal (3) kaum oder nicht zurückgeschnitten ist.

6. Blütenmischer nach Anspruch 4 oder 5, **dadurch gekennzeichnet, daß** der kürzere nach außen verlaufende Kanal (2') invers zurückgeschnitten ist.

7. Blütenmischer nach einem der vorangegangenen Ansprüche 4 bis 6, **dadurch gekennzeichnet, daß** sich die Gruppe (11) über dem Umfang (U) periodisch oder spiegelsymmetrisch wiederholt.

## Claims

1. Bloom mixer for a turbofan engine in which a bypass flow (5) delivered by a fan is mixed with a hot gas flow (4) issuing from the core engine, said bloom mixer having essentially circumferentially (circumferential direction U) equally spaced gutter-shaped, radially (radial direction R) moderately outward and inward directed ducts (2, 2', 3, 3') to guide both the bypass flow (5) and the hot gas flow (4), said ducts each having an end formed by an essentially plane end section (10), and the respective end sections (10) of adjacent ducts (2, 3, 2', 3') when viewed in a longitudinal section extending in the direction of flow (S) being inclined vis-à-vis each other, so that the various ducts (2, 2', 3, 3') when viewed in the direction of flow (S) issue at various points offset one from the other, **characterized in that** four each circumferentially (circumferential direction U) successive ducts form a group (11) that repeats over the entire circumference and that consists of two moderately radially (radial direction R) outward directed ducts (2, 2') and two moderately radially (radial direction R) inward directed ducts (3, 3'), one each of these ducts being shorter and the other one longer, with a longer inward directed duct (3') being followed by a longer outward directed duct (2), when viewed in the circumferential direction (U), this longer outward directed duct (2) being followed by a shorter inward directed duct (3), which in turn is followed by a shorter outward directed duct (2').

2. Bloom mixer in accordance with Claim 1, **characterized in that** the longer inward directed duct (3') is heavily scarfed, while the shorter inward directed duct (3) is hardly scarfed or not scarfed at all.

3. Bloom mixer in accordance with Claim 1 or 2, **characterized in that** the end section (10) of the shorter outward directed duct (2') is inclined counter the direction of flow (S) and accordingly in inversely scarfed.

4. Bloom mixer in accordance with one of the preceding Claims 1 to 3, **characterized in that** the group (11) repeats periodically or axially symmetrically over the circumference (U).

5. Bloom mixer in accordance with Claim 4, **characterized in that** the longer inward directed duct (3') is heavily scarfed, while the shorter inward directed duct (3) is hardly scarfed or not scarfed at all.

6. Bloom mixer in accordance with Claim 4 or 5, **characterized in that** the shorter outward directed duct (2') is inversely scarfed.

7. Bloom mixer in accordance with one of the preceding Claims 4 to 6, **characterized in that** the group (11) repeats periodically or axially symmetrically over the circumference (U).

## Revendications

1. Mélangeur en forme de fleur destiné à un turboréacteur à double flux, dans lequel un flux secondaire (5) amené par une soufflante est mélangé avec un flux de gaz chaud (4) provenant du coeur du moteur et qu'à cet effet, le mélangeur en forme de fleur présente des canaux (2, 2', 3, 3') en forme de goulotte pour guider le flux secondaire (5) et le flux de gaz chaud (4), qui sont pour l'essentiel répartis régulièrement sur la circonférence (U) et s'étendent alternativement légèrement vers l'extérieur et vers l'intérieur dans le sens radial (R), et dont chaque extrémité est formée par une section terminale (10) plane pour l'essentiel, sachant que vues dans une coupe longitudinale s'étendant dans le sens d'écoulement (S), les sections terminales (10) de canaux voisins (2, 3, 2', 3') sont inclinées les unes par rapport aux autres, si bien que vus dans le sens d'écoulement (S), différents canaux (2, 2', 3, 3') débouchent à différents endroits et donc de manière décalée les uns par rapport aux autres, **caractérisé en ce que** respectivement quatre canaux se succédant dans le sens circonférentiel (U) forment un groupe (11) se répétant sur toute la circonférence et constitué de deux canaux (2, 2') s'étendant légèrement vers l'extérieur dans le sens radial (R) ainsi que de deux canaux (3, 3') s'étendant légèrement vers l'intérieur dans le sens radial (R), dont respectivement l'un est plus court et l'autre plus long, sachant que vus dans le sens circonférentiel (U), à un canal plus long (3') s'étendant vers l'intérieur succède un canal plus long (2) s'étendant vers l'extérieur, lui-même suivi d'un canal plus court (3) s'étendant vers l'intérieur, auquel se raccorde un canal plus court (2') s'étendant vers l'extérieur.

2. Mélangeur en forme de fleur selon la revendication 1, **caractérisé en ce que** le canal plus long (3') s'étendant vers l'intérieur est fortement raccourci, alors que le canal plus court (3) s'étendant vers l'intérieur n'est guère ou pas raccourci.

3. Mélangeur en forme de fleur selon la revendication 1 ou 2, **caractérisé en ce que** la section terminale (10) du canal plus court (2') s'étendant vers l'extérieur est inclinée contre le sens d'écoulement (S) et donc raccourci de façon inverse.

4. Mélangeur en forme de fleur selon une des revendications 1 à 3, **caractérisé en ce que** le groupe (11) se répète sur la circonférence (U) d'une manière périodique ou selon une symétrie axiale.

5. Mélangeur en forme de fleur selon la revendication 4, **caractérisé en ce que** le canal plus long (3') s'étendant vers l'intérieur est fortement raccourci, alors que le canal plus court (3) s'étendant vers l'intérieur n'est guère ou pas raccourci.

6. Mélangeur en forme de fleur selon la revendication 4 ou 5, **caractérisé en ce que** le canal plus court (2') s'étendant vers l'extérieur est raccourci de façon inverse.

7. Mélangeur en forme de fleur selon une des revendications 4 à 6, **caractérisé en ce que** le groupe (11) se répète sur la circonférence (U) d'une manière périodique ou selon une symétrie axiale.
